(19) Europäisches Patentamt
European Patent Office
Office européen des brevets

(11) Veröffentlichungsnummer: **0 134 970**
A1

# (12) EUROPÄISCHE PATENTANMELDUNG

(21) Anmeldenummer: **84107819.9**

(22) Anmeldetag: **05.07.84**

(51) Int. Cl.[4]: **C 08 G 18/38**
C 08 G 18/60, C 08 G 18/08
C 08 G 18/28, C 08 G 18/67
C 09 D 5/44

(30) Priorität: **18.07.83 DE 3325814**

(43) Veröffentlichungstag der Anmeldung:
**27.03.85 Patentblatt 85/13**

(84) Benannte Vertragsstaaten:
**AT BE DE FR GB IT NL SE**

(71) Anmelder: **Akzo GmbH**
**Postfach 10 01 49 Kasinostrasse 19-23**
**D-5600 Wuppertal-1(DE)**

(72) Erfinder: **Kersten, Hilde, Dr. Dipl.-Chem.**
**Mainhausenerstrasse 18**
**D-8765 Erlenbach(DE)**

(72) Erfinder: **Mägerlein, Helmut, Dr. Dipl.-Chem.**
**Blumenstrasse 40**
**D-8753 Obernburg(DE)**

## (54) Flüssige Beschichtungskompositionen auf der Basis von amidgruppenhaltigen Aminoharnstoffharzen mit gegebenenfalls Urethan- oder Thiourethangruppierungen.

(57) Flüssige Beschichtungskompositionen auf der Basis von amidgruppenhaltigen Aminoharnstoffharzen mit gegebenenfalls Urethan- oder Thiourethangruppierungen.

Diese, zwischen 100° und 140° härtbaren Beschichtungskompositionen sind das Reaktionsprodukt von mindestens

(A) einem Polyaminoamid, das aus
  (1) einer oder mehreren Monocarbonsäuren mit 1- 24 C-Atomen und/oder
  (2) Dicarbonsäuren mit 2 - 40 C-Atomen, gegebenenfalls im Gemisch mit Tricarbonsäuren, und einem oder mehreren Alkylen- oder Polyaminen mit 2 - 8 primären und/oder sekundären Aminogruppen und 2 - 20 C-Atomen hergestellt worden ist,

wobei das Polyaminoamid gegebenenfalls teilweise unter Wasserabspaltung entstandene cyclische Aminidingruppierungen und/oder als Ketimin blockierte Aminogruppen enthält,

(B) einem oder mehreren organischen Isocyanat (en) mit 1 bis 4 Isocyanatgruppen und 2 - 48 C-Atomen und gegebenenfalls von

(C) (1) einem oder mehreren primären oder sekundären gesättigten oder ungesättigten Mono- oder Diamin(en) und/oder
  (2) einem oder mehreren gesättigten oder ungesättigten Mono- oder Dihydroxyverbindungen oder den entsprechenden Mercaptoverbindungen

und liegen in der Aminform oder nach Ausbildung von kationischen Gruppen durch Umsetzung mit einer Säure als organische, wäßrig-organische oder wäßridge Lösungen bzw. Dispersionen vor. Sie können nach üblichen Lackauftragsverfahren, insbesondere auch nach dem kathodischen Elektrotauchlackieren, verarbeitet werden.



Croydon Printing Company Ltd

# Flüssige Beschichtungskompositionen auf der Basis von amidgruppenhaltigen Aminoharnstoffharzen mit gegebenenfalls Urethan- oder Thiourethangruppierungen.

A k z o GmbH

Wuppertal

-.-.-.-.-

Die vorliegende Erfindung betrifft Beschichtungskompositionen auf der Basis von selbstvernetzenden amidgruppenhaltigen Aminoharnstoffharzen mit gegebenenfalls Urethan- oder Thiourethangruppierungen und deren Verwendung als Beschichtungsstoffe.

Die kathodische elektrische Beschichtung wird bekanntlich seit einiger Zeit in industriellem Maßstab durchgeführt und erfolgt im Prinzip so, daß ein elektrisch leitender Gegenstand in eine wäßrige Dispersion eines kationischen polymeren Materials eingetaucht wird. Der zwischen dem elektrisch leitenden und als Kathode fungierenden Gegenstand und der Anode als Gegenelektrode durch die Dispersion geleitete Strom bewirkt die Abscheidung auf der Kathode.

Die bisher in der Technik bekannten, ausschließlich nach dem kathodischen Elektrotauchlackieren (Kataphorese) verarbeitbaren Harze erfüllen ihren Zweck insofern noch nicht optimal, als die mit ihnen erzielbaren Schichtdicken noch gering, die erforderlichen Härtungstemperaturen noch relativ hoch ( $\geq$ 170°C) und die Emission beim Einbrennen der Überzugsmittel infolge Abspaltung von Polyisocyanat-Blockierungsmitteln ziemlich beträchtlich sind. Ein Beispiel hierfür stellen die in der DE-OS 3 004 538 beschriebenen Harze dar, die aus definierten basischen Polyaminoharzaddukten mit maskierten Polyisocyanaten hergestellt werden.

Das Problem der Umweltbelastung tritt auch bei PUR-1K-Lacksystemen auf der Basis blockierter Polyisocyanate auf. Während der bei erhöhter Temperatur erfolgenden Vernetzungsreaktion wird bei diesen Systemen, die üblicherweise ein mit Phenol verkapptes aromatisches Polyisocyanat enthalten, die Abspaltung des Blockierungsmittels ausgelöst (vgl. Ullmann, Band 15 (1978), Seite 635).

Die vorliegende Erfindung stellt sich daher die allgemeine Aufgabe, spezifische Beschichtungskompositionen mit guter Korrosionsstabilität bereitzustellen, die sich nach den verschiedensten Lackauftragsverfahren verarbeiten lassen und deren Einbrennen nach erfolgter Beschichtung ohne Einbuße von physikalischen Eigenschaften bei niedriger Temperatur, z.B. zwischen 100°C und 140°C, ausgeführt werden kann, ohne daß hierbei in unrentabler Weise flüchtige Polyisocyanat-Blockierungsmittel abgespalten werden, die mit der Abluft verloren gehen und die Umwelt belasten.

Die Aufgabe wird erfindungsgemäß durch flüssige Beschichtungskompositionen auf der Basis von amidgruppenhaltigen Aminoharnstoffharzen mit gegebenenfalls Urethan- oder Thiourethangruppierungen gelöst, die dadurch gekennzeichnet sind, daß sie das Reaktionsprodukt von mindestens

(A) einem Polyaminoamid, das aus

(1) einer oder mehreren Monocarbonsäuren mit 1 - 24 C-Atomen und/oder

(2) Dicarbonsäure mit 2 - 40 C-Atomen, gegebenenfalls im Gemisch mit Tricarbonsäuren, und einem oder mehreren Alkylen- oder Polyaminen mit 2 - 8 primären und/oder sekundären Aminogruppen und 2 - 20 C-Atomen hergestellt worden ist,

wobei das Polyaminoamid gegebenenfalls teilweise unter Wasserabspaltung entstandene cyclische Aminidingruppierungen und/oder als Ketimin blockierte Aminigruppen enthält,

(B) einem oder mehreren organischen Isocyanat(en) mit 1 bis 4 Isocyanatgruppen und 2 - 48 C-Atomen und gegebenenfalls von

(C) (1) einem oder mehreren primären oder sekundären gesättigten oder ungesättigten Mono- oder Diamin(en) und/oder

(2) einem oder mehreren gesättigten oder ungesättigten Mono- oder Dihydroxyverbindungen oder den entsprechenden Mercaptoverbindungen

darstellen und in der Aminform oder nach Ausbildung von kationischen Gruppen durch Umsetzung mit einer Säure als organische, wäßrig-organische oder wäßrige Lösungen bzw. Dispersionen vorliegen. Das Reaktionsprodukt kann auch auf dem zu beschichtenden Substrat direkt hergestellt werden, indem man z.B. die Komponenten (A + C) + B oder A + (B + C) nach dem Zweikomponenten-Spritzverfahren verarbeitet.

Das Polyaminoamid, woraus das kationische Bindemittel mit aufgebaut ist, erhält man erfindungsgemäß durch Reaktion von einer Monocarbonsäure mit 1 - 24 C-Atomen und/oder einer Dicarbonsäure mit 2 - 40 C-Atomen, gegebenenfalls im Gemisch mit Tricarbonsäuren, mit einem oder mehreren primären und/oder sekundären Alkylen- oder Polyaminen mit 2 - 20 C-Atomen. Als Monocarbonsäuren eignen sich u.a. gesättigte aliphatische Monocarbonsäuren, wie Ameisensäure, Propionsäure, Valeriansäure und Capronsäure, aliphatische Monocarbonsäuren mit einer oder mehreren, gegebenenfalls auch konjugierten Doppelbindungen, wie Acrylsäure, Methacrylsäure und Brassidinsäure, cycloaliphatische Monocarbonsäuren, wie Cyclopentanmonocarbonsäure, Cyclopentanpropionsäure und Cyclohexanmonocarbonsäure und aromatische Monocarbonsäuren, wie Benzoesäure und p-tert. Butylbenzoesäure. Entsprechendes gilt für die verwendbaren Dicarbonsäuren, die u.a. also gesättigt oder ungesättigt sein können. Sowohl die Monocarbonsäuren als auch die Dicarbonsäuren können inerte Substituenten, wie Halogen-, Nitro-, Aceto-, Alkyläther- oder Alkylthio-Gruppen, enthalten. Zahlreiche Einzelvertreter der gemäß Anspruch 1 verwendbaren Ausgangsstoffgruppen, wie Monocarbonsäuren, Dicarbonsäuren, Alkylen- oder Polyamine, Isocyanate, Mono- oder Dihydroxyverbindungen, werden weiter unten im Zusammenhang mit den bevorzugten Ausführungsformen der Erfindung spezifiziert behandelt. Im Rahmen der Erfindung wird es bevorzugt, daß zum Erhalt der Reaktionsprodukte des Anspruchs 1 unter den dort aufgezählten Ausgangskomponenten zumindest eine verwendet wird, die eine oder mehrere Doppelbindungen aufweist.

Insbesondere wird bevorzugt, daß die Beschichtungskompositionen das Reaktionsprodukt von mindestens

(A) einem Polyaminoamid, das aus

(1) einer oder mehreren überwiegend höheren Fettsäure(n) und einem oder mehreren Polyaminen und/oder

(2) Dicarbonsäuren, gegebenenfalls im Gemisch mit Tricarbonsäuren und/oder mit vorwiegend höheren, im wesentlichen ungesättigten Fettsäuren ,und einem oder mehreren Polyaminen hergestellt worden ist,

wobei das Polyaminoamid gegebenenfalls teilweise unter Wasserabspaltung entstandene cyclische Aminidingruppierungen und/oder als Ketimin blickierte Aminogruppen enthält,

(B) einem oder mehreren organischen Isocyanat(en) mit 1 bis 3 Isocyanatgruppen und gegebenenfalls von

(C) (1) einem oder mehreren primären oder sekundären geättigten oder ungesättigten Mono- oder Diamin(en) und/oder

(2) einem oder mehreren gesättigten oder ungesättigten Mono- oder Dihydroxyverbindungen oder den entsprechenden Mercaptoverbindungen

darstellen und in der Aminform oder nach Ausbildung von kationischen Gruppen durch Umsetzung mit einer Säure als organische, wäßrig-organische oder wäßrige Lösungen bzw. Dispersionen vorliegen. Das Reaktionsprodukt kann auch auf dem zu beschichtenden Substrat direkt hergestellt werden, indem man z.B. die Komponenten (A + C) + B oder A +(B + C) nach dem Zweikomponenten-Spritzverfahren verarbeitet.

Die Polyaminoamid-Komponente A (1) leitet sich bezüglich der Säurekomponente vorwiegend von höheren Fettsäuren ab. Diese können gesättigte Fettsäuren darstellen, aber auch eine oder mehrere Doppelbindungen enthalten. Beispiele für die in natürlichen Ölen, wie Leinöl, Tallöl und Ricinusöl, als Fettsäurederivate vorkommenden mehrfach ungesättigten Fettsäuren sind 9.11-Octadecadiensäure, 9.12-Octadecadiensäure, Linolsäure, Linolensäure, α-Eläostearinsäure und ß-Eläostearinsäure. Beispiele für einfach ungesättigte Fettsäuren sind z.B. Ölsäure, deren höheren Homologe und Zoomarinsäure. Selbstverständlich können auch entsprechende und ähnliche synthetische Fettsäuren als Ausgangsmaterial dienen. Die im wesentlichen ungesättigten Fettsäuren können als Polyaminoamidbestandteil einzeln oder als Gemisch eingesetzt werden. Aus ökonomischen Gründen wird es jedoch bevorzugt, die im Handel erhältlichen Gemische derartiger Säuren einzusetzen, die auch noch gesättigte Fettsäuren, wie Caprylsäure, Caprinsäure, Laurinsäure, Palmitinsäure und Stearinsäure, enthalten.

So eignen sich als Säurekomponente für das Polyaminoamid (A) (1) insbesondere Ricinenfettsäuren. Diese stellen Gemische dehydratisierter Ricinusöl-Fettsäuren dar und bestehen im wesentlichen aus 9.11-Octadecadiensäure und 9.12-Octadiensäure (Ricinensäuren) neben 5 - 7% Ölsäure und 3 - 5% gesättigter Fettsäuren.Ebenso sind auch die Leinölfettsäuren geeignet, die Gemische aus Linolensäure (~ 38%), Linolsäure (~ 42%), Ölsäure (~ 10%), Stearinsäure (~ 3%) und Palmitinsäure (~ 7%) darstellen, deren prozentuale Zusammensetzung natürlich in Grenzen schwanken kann. Auch Tallölfettsäuren, die als Fettsäuren insbesondere Palmitin-, Stearin-, Olein-, Linol- und Linolensäure enthalten, sind verwendbar.

Als höhere Fettsäuren lassen sich grundsätzlich auch gesättigte Fettsäuren, wie Caprylsäure, Stearin- und Palmitinsäure, verwenden oder mitverwenden. Häufig empfiehlt es sich, die langkettigen Fettsäuren zu einem Teil durch kurzkettige Fettsäuren,wie Essigsäure, Propionsäure oder Buttersäure zu ersetzen. Dies führt in einigen Fällen zu stabileren Suspensionen und härteren eingebrannten Filmen.

Die Polyaminoamid-Komponente (A) (1) kann sich bezüglich der Aminkomponente von aromatischen, cycloaliphatischen, aliphatischen Diaminen und von Alkylen- bzw. Polyalkylenpolyaminen und Polyalkylenätherdiaminen, sowie deren Gemischen ableiten. Beispiele hierfür sind: 4,4'-Diaminodiphenylmethan, 3,3'-Dimethyl-4,4'-diaminodiphenylmethan, (3-Methyl-4-aminocyclohexyl)-(3-methyl-4-aminophenyl)-methan, 4,4'-Diaminodicyclohexylmethan, 3,3'-Dimethyl-4,4'-diaminodicyclohexylmethan, 2,2'-Bis-(4-aminocyclohexyl)-propan, Äthylendiamin, Propylendiamin, Butylendiamin. Hexamethylendiamin, 1,5-Diaminopentan, 1,10-Diaminodecan, 1,12-Diaminidodecan, Bis-(6-aminohexyl)-amin, 4,7-Dioxadecan-1.10-diamin, 4,9-Dioxadodecan-1.12-diamin, 7-Methyl-4.10-dioxatridecan-1.13-diamin, 3-(2-Aminoäthyl)-aminopropylamin, 3,3'-Diaminodipropylamin, Bis-(3-Amino-propyl)-methylamin und Gemische von N-substituierten 1,3-Diaminopropanen, wie 1-Amino-3-(3-aminopropyl)-aminopropan und 1-Amino-3-N-methyl-3-(3-aminopropyl)-aminopropan, Äthylendiamin, Propylendiamin-1,3, Tetramethylendiamin-1,4.und Pentamethylendiamin-1,5.

Vorteilhaft sind insbesondere die Alkylen- bzw. Polyalkylenpolyamine der Formel

(1) $H_2N-(CH_2-CH_2-NH)_n-CH_2-CH_2-NH_2$ und /oder

(2) $H_2N-(CH_2-CH_2-CH_2-NH)_m-R-NH-CH_2-CH_2-CH_2-NH_2$,

worin n = 0 und/oder 1 und/oder 2 und/oder 3 und m = 0 und/oder 1 und R eine Alkylengruppe von 2 - 6 C-Atomen oder Diäthylenamin - $CH_2-CH_2-NH-CH_2-CH_2$ - bedeuten. Als Verbindungen hierfür seien beispielhaft genannt: Diäthylentriamin, Triäthylentetramin, Tetraäthylenpentamin, N,N'-Bis-(3-aminopropyl)-äthylendiamin, Dipropylentriamin, Tripropylentetramin und Tetrapropylenpentamin. Selbstverständlich sind Gemische dieser Polyamine ebenfalls einsetzbar. Die aus diesen Polyaminen mit Säuren hergestellten Polyaminoamide können unter drastischen Reaktionsbedingungen intramolekular Wasser abspalten und dabei Imidazolinringe bzw. Tetrahydropyrimidinderivate bilden:

(3) 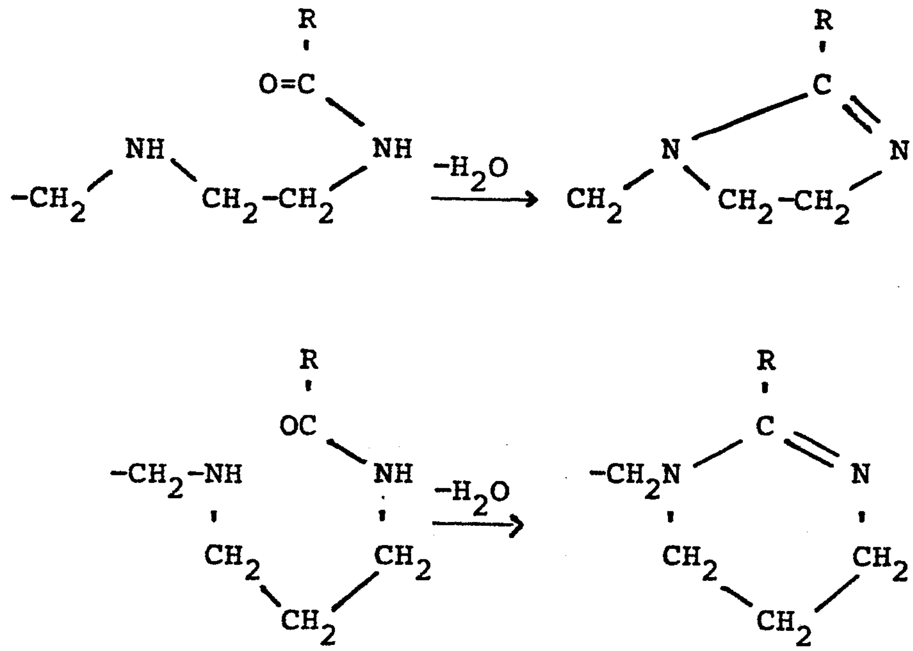

Häufig empfiehlt es sich für eine Verbesserung der Dispergierbarkeit des Harzes in Wasser und für eine stärkere Vernetzung bei dem Einbrennvorgang, einen Teil der primären Aminogruppen nicht mit Säuren zum Amid umzusetzen, sondern mit Keton als Ketimin zu blockieren. Geeignete Ketone sind z.B. Methylisobutylketon, Methyläthylketon und Cyclohexanon. In der wäßrigen Suspension wird das Keton abgespalten und das primäre Amin zurückgebildet.

Es wird bevorzugt, daß das Polyaminoamid A (1) ein Reaktionsprodukt aus Ricinenfettsäuren oder Ricinenfettsäuren und Essigsäure oder Stearinsäure mit einem oder mehreren Alkylen- bzw. Polyalkylenpolyaminen der Formel

$$H_2N - (CH_2 - CH_2 - NH)_n - CH_2 - CH_2 - NH_2,$$

worin n = 0 und/oder 1 und/oder 2 und/oder 3 bedeuten, und/oder

$$H_2N-(CH_2-CH_2-CH_2-NH)_n-R-NH-CH_2-CH_2-CH_2-NH_2,$$

worin n = 0 und/oder 1 und R eine Alkylengruppe mit 2 bis 6 C-Atomen oder Diäthylenamin $-CH_2-CH_2-NH-CH_2-CH_2-$ bedeuten, ist und das Reaktionsprodukt gegebenenfalls zusätzlich teilweise unter Wasserabspaltung entstandene Imidazolin- und/oder Tetrahydropyrimidinringe und/oder Ketimingruppen enthält.

Die Polyaminoamid-Komponente (A) (2) kann sich bezüglich der Säurekomponente von Dicarbonsäuren, gegebenenfalls im Gemisch mit Tricarbonsäuren ableiten. Als Beispiele derartiger Verbindungen seien genannt: Oxalsäure, Malonsäure, Bernsteinsäure, Glutarsäure, Adipinsäure, 2,2,4-Trimethyladipinsäure, Pimelinsäure, Korksäure, Azelainsäure, Sebazinsäure, Isosebazinsäure, Decandicarbonsäure, Dodecandicarbonsäure, Itaconsäure, Maleinsäure, Aconitsäure, Citronensäure, Trimellithsäure, Trimerfettsäuren, Phthalsäure, Isophthalsäure, Terephthalsäure, Tetrachlorphthalsäureanhydrid, Tetrahydrophthalsäure(-anhydrid), Hexahydrophthalsäure und Hexahydroterephthalsäure. Auch Gemische der genannten Dicarbonsäuren sind einsetzbar. Anstelle der Säuren können ebenfalls die gängigen Säurederivate, wie Ester, Säurechloride und Anhydride, verwendet werden.

Besonders vorteilhaft ist es, wenn sich die Polyaminoamid-Komponente (A) (2) bezüglich der Säurekomponente von Dimerfettsäuren ableitet. Diese werden ihrerseits aus pflanzlichen doppelt oder dreifach ungesättigten Fettsäuren (Linol-, Linolen- und Rizinensäure, Holzöl-Fettsäure) bzw. deren Methylestern durch thermische Dimerisation, meist in Gegenwart von Katalysatoren (Bentonit, Montmorillonit, Fullererde), hergestellt. Die im wesentlichen nach Diels-Alder verlaufende Additionsreaktion setzt eine Isomerisierung zu Säuren mit konjugierter Doppelbildung voraus. Neben den Dimerfettsäuren können dabei noch 20 -30% trimere Fettsäuren entstehen. Zum Aufbau der Polyaminoamid-Komponente (A) (2) können den Dimerfettsäuren bis zu 60 Gewichtsprozent der oben beschriebenen höheren, im wesentlichen ungesättigten Fettsäuren zugemischt werden, insbesondere Tallölfettsäuren und Ricinenfettsäuren.

Als Aminokomponente der Polyaminoamide (A) (2) kommen die weiter oben für die Polyaminoamid-Komponente (A) (1) bereits beschriebenen Aminkomponenten in Betracht. Vorteilhaft ist es auch hier, Alkylen- bzw. Polyalkylenpolyamine der Formeln

$$H_2N - (CH_2 - CH_2 - NH)_n - CH_2 - CH_2 - NH_2 \quad \text{und}$$

$$H_2N-(CH_2-CH_2-CH_2-NH)_m-R-NH-CH_2-CH_2-CH_2-NH_2,$$

worin n = 0 und/oder 1 und/oder 2 und/oder 3 und m = 0 und/oder 1 und R eine Alkylengruppe von 2 - 6 C-Atomen oder Diäthylenamin $- CH_2-CH_2-NH-CH_2-CH_2 -$ bedeuten, einzusetzen. Bei der Umsetzung der Alkylen- bzw. Polyalkylenpolyamine mit Dimerfettsäuren, gegebenenfalls im Gemisch mit höheren, im wesentlichen ungesättigten Fettsäuren, wird zusätzlich teilweise die Bildung von Imidazolin- und Tetrahydropyrimidin-haltigen Kondensationsprodukten angestrebt, die durch Cyclisierung der Aminoamidkomponente unter Abspaltung von 1 Mol Wasser erfolgt. Zu diesem Zweck wird das beispielsweise bei 160°C hergestellte Umsetzungsprodukt aus den dimeren Fettsäuren und dem Polyäthylenamin z.B. 6 Stunden lang auf 300°C erhitzt. Die in Rede stehenden Produkte sind z.B. unter dem Warenzeichen Versamid im Handel erhältlich (Firma Schering).

Es wird bevorzugt, daß das Polyaminoamid (A) (2) ein Reaktionsprodukt aus Dimerfettsäuren und gegebenenfalls Tallölfettsäure oder Ricinenfettsäuren mit einem oder mehreren Polyalkylen-polyaminen der Formeln

$$H_2N-(CH_2-CH_2-NH)_n-CH_2-CH_2-NH_2 \quad \text{und/oder}$$

$$H_2N-(CH_2-CH_2-CH_2-NH)_m-R-NH-CH_2-CH_2-CH_2-NH_2,$$

worin n = 0 und/oder 1 und/oder 2 und/oder 3 und m = 0 und/oder 1 und R eine Alkylengruppe von 2 - 6 C-Atomen oder Diäthylenamin-$CH_2-CH_2-NH-CH_2-CH_2$ - bedeuten, ist und das Reaktionsprodukt gegebenenfalls teilweise unter Wasserabspaltung entstandene Imidazolinringe und/oder Tetrahydropyrimidinringe und/oder Ketimingruppen enthält.

Die Polyaminoamide (A) (2) enthalten in den überwiegenden Fällen ebenfalls primäre Aminogruppen. Auch hierbei ist es häufig von Vorteil, wenn man sie vor der Umsetzung mit (Poly)isocyanaten mit Keton als Ketimin blockiert. Für dieses Blockieren kommen dieselben Ketone in Betracht, wie bei den Polyaminoamidkomponenten (A) (1).

Zur Bildung von amidgruppenhaltigen Aminoharnstoffharzen mit gegebenenfalls Urethangruppierungen wird das Polyaminoamid (A) (1) und/oder (A) (2) u.a. mit einem oder mehreren Isocyanaten mit 1 bis 3 Isocyanatgruppen nach an sich konventionellen Verfahrensmethoden umgesetzt. Zu den hierbei verwendbaren Isocyanaten gehören beispielsweise die aliphatischen Diisocyanate, wie z.B. 1,6-Hexamethylendiisocyanat, 1,8-Octamethylendiisocyanat, 1,12-Dodecamethylendiisocyanat, 2,2,4-Trimethyl-hexamethylendiisocyanat und ähnliche Alkylendiisocyanate, 3,3'-Diisocyanatdipropyläther, 3-Isocyanatmethyl-3,5,5-trimethylcyclohexylisocyanat, Cyclopentylen-1,3-diisocyanat, Cyclohexylen-1,4-diisocyanat, 4-Methyl-1,3-diisocyanatocyclohexan, trans-Vinylidendiisocyanat und ähnlich ungesättigte Diisocyanate, 4,4'-Methylen-bis(isocyanatocyclohexan) und verwandte Isocyanate, aromatische Diisocyanate, wie 4,4'-Diisocyanatodiphenyl, 4,4'-Diisocyanato-3,3'-dichlor-diphenyl, 4,4'-Diisocyanato-3,3'-dimethoxydiphenyl, 4,4'-Diisocyanato-3,3'-dimethyl-diphenyl, 4,4'-Diisocyanato-3,3'-diphenyl-diphenyl, 4,4'-Diisocyanatodiphenylmethan, 4,4'-Diisocyanato-3,3'-dimethyl- diphenylmethan, 1,5-Diisocyanatonaphthalin, Diisocyanato-toluole, N,N'-(4,4'-Dimethyl-3,3'-diisocyanatodiphenyl)-uretdion und Bis-1,3-(isocyanatomethyl)-benzol.

Weiterhin eignen sich für den oben angegebenen Zweck Polyisocyanate mit mehr als 2 Isocyanatgruppen. Als Beispiele seien hierfür Biuret-triisocyanat, Triisocyanato-triphenylmethan und das Trimerisat aus Diisocyanato-toluol sowie das Addukt von einem Mol Trimethylolpropan und 3 Molen Toluoldiisocyanat, das Addukt von einem Mol Trimethylolpropan und 3 Molen Isophorondiisocyanat, 1,3,5-Triisocyanato-benzol und 2,4,6-Triisocyanato-toluol genannt.

Ferner sind Monoisocyanate einsetzbar. Als Vertreter dieser Verbindungsklasse seien Isocyanato-methan, Isocyanato-i-propan, 1-Isocyanato-n-butan, 1-Isocyanato-2-methyl-propan, Isocyanato-cyclohexan, Isocyanato-benzol, 1-Isocyanato-3-chlorbenzol, 1-Isocyanato-4-chlorbenzol, 1-Isocyanato-3,4-dichlorbenzol, 3-Isocyanato-toluol, 4-Isocyanato-2-chlor-toluol, 4-Isocyanatosulfonyl-toluol, 1-Isocyanato-naphthalin, Vinylisocyanat und Propenylisocyanat beispielhaft genannt.

Im allgemeinen wird bevorzugt, daß die Komponente (B) ein Gemisch aus 2,4- und 2,6-Diisocyanato-toluol und/oder 4,4'-Diisocyanato-diphenylmethan oder ein Gemisch dieser Diisocyanate mit einem Monoisocyanat darstellt. Eine weitere bevorzugte Ausführungsform besteht darin, daß die Komponente (B) ein Triisocyanat oder ein Gemisch aus einem Triisocyanat und einem Mono- oder Diisocyanat darstellt.

Zur leichteren Steuerung spezifischer Harzeigenschaften, beispielsweise zur Erzielung einer stärkeren Vernetzung oder einer Kettenverlängerung des Makromoleküls oder einer besseren Dispergierbarkeit oder verbesserter Verlaufseigenschaften, kann gegebenenfalls die Mitverwendung einer oder mehrerer der im Anspruch 1 angeführten Verbindungen (C) vorteilhaft sein.

Im Rahmen der Verbindungen (C)(1) eignen sich im Prinzip alle primären oder sekundären gesättigten oder ungesättigten Mono- oder Diamine, insbesondere die primären oder sekundären Allyl- bzw. Methallylamine, z.B. Allylamin, Methallylamin, Diallylamin und Dimethallylamin.

Die gesättigten primären und/oder sekundären aliphatischen und cycloaliphatischen sowie aromatischen und heterocyclischen Amine sind insbesondere als Kettenabbrecher wirksam und tragen zur Vermeidung einer zu starken Vernetzung des Harzes und zur Erhöhung der Härte bei den eingebrannten Filmen bei. Sie verbessern im allgemeinen auch das Emulgierverhalten in Wasser. Verwendbar sind z.B. Äthylamin, Propylamin, Di-n-propylamin, Di-i-propylamin, Di-sec-butylamin, n-Butylamin, sek.-Butylamin, Amylamin, Isoamylamin, n-Hexylamin, Hexamethylenimin, n-Octylamin, 2-Äthyl-hexylamin, n-Decylamin, i-Amylamin, Di-i-amylamin, Di-i-butylamin, $\alpha$-Naphthylamin, Pyrrolidin, Diäthylamin, Cyclohexylamin, Dicyclohexylamin, Piperidin, Morpholin, Piperazin, Anilin, Methylanilin und die weiter oben für die Polyaminoamid-Komponente (A) (1) bereits beispielhaft aufgezählten Vertreter von aromatischen, cycloaliphatischen und aliphatischen Diaminen.

Es können nicht nur die Einzelverbindungen als solche, sondern auch Mischungen von zwei oder mehreren der oben beispielhaft genannten Amine verwendet werden. Dies gilt auch für Mischungen mit den anderen für die Komponente (C) genannten Verbindungsklassen.

Im Rahmen der Erfindung wird bevorzugt, daß die Komponente (C) (1) Allylamin, Diallylamin, Di-n-propylamin, Di-n-butylamin, Di-i-butylamin, Piperidin, Hexamethylendiamin, Diaminodiphenylsulfon, Diaminodiphenylmethan und/oder 4,9-Dioxadodecan-1,12-diamin und/oder 4,7-Dioxadecan-1,10-diamin ist.

Als Komponente (C) eignen sich ebenfalls gesättigte oder ungesättigte Mono- oder Dihydroxyverbindungen oder die entsprechenden Mercaptoverbindungen. Hierbei wirken die ungesättigten Verbindungen, wie Allylalkohol, Methallylalkohol, Crotylalkohol, Propargylalkohol und 10-Undecen-1-ol nicht nur als Kettenabbrecher, sondern nehmen über die reaktive Doppelbindung an der späteren Vernetzung des Harzes teil.

In gleicher Weise funktionieren die cyclischen oder polycyclischen Alkohole, die in ihrem cyclischen oder polycyclischen Ringsystem olefinisch ungesättigt sind. Beispiele besonders gut geeigneter Verbindungen sind in den nachfolgenden Formelbildern dargestellt.

(1) 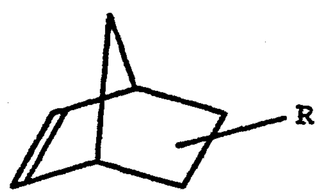 Norborneyl-

(2) 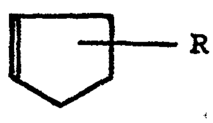 Cyclopentenyl-

(3) 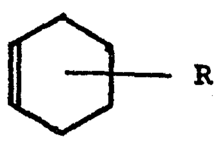 Cyclohexenyl-

(4) 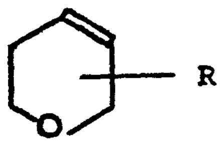 3-Dihydropyranyl-

(5) 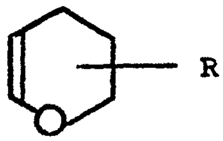 2-Dihydropyranyl-

(6) 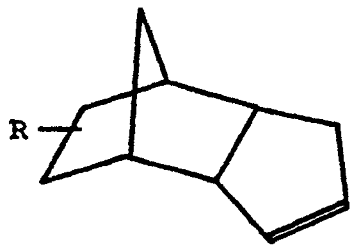 Dicyclopentenyl-

Hierin bedeuten R insbesondere die Gruppierungen $-OH$, $-CH_2OH$, $-CH_2-CH_2OH$, $-O-CH_2-CH_2-OH$, $-CH_2-O-CH_2-CH_2-OH$, $-CH_2-O-CH_2-\underset{OH}{CH}-CH_3$ und $-CO-NH-CH_2-CH_2-OH$.

Beispiele für gesättigte Mono- oder Dihydroxyverbindungen sind u.a. die aliphatischen und cycloaliphatischen Monoalkohole, wie Methanol, Äthanol, n-Propanol, 2-Äthyl-1-hexanol, 2-Heptanol, 1-Octanol, 1-Decanol und Cyclohexanol; die aliphatischen und cycloaliphatischen Diole, wie Äthylenglykol, Diglykol, Triglykol, Butylenglykol, 1,5-Pentandiol, 2-Methyl-1,4-butandiol, 2,2-Dimethyl-1,3-propandiol, 1,10-Dekandiol, 2,2-Bis-(4-hydroxycyclohexyl)-propan, 1,4-Dihydroxymethylcyclohexan, Glycerinmonoäther der allgemeinen Formel

$$R - O - CH_2 - CHOH - CH_2OH,$$

wobei R eine Dicyclopentenyl-, Äthoxidicyclopentenyl-, Norborneyl-, Dihydropyranyl-, Cyclopentenyl-u. Cyclohexenyl-Gruppe bedeutet, Methyldiäthanolamin, n-Butyldiäthanolamin, Cyclohexyldiäthanolamin und Polyglykole, wie Polyäthylenglykol und Polypropylenglykol und deren Mischpolymerisate mit einem Molekulargewicht bis zu 1000. Beispiele für phenolische Verbindungen sind u.a. Phenol, Äthylphenole,wie 2-Äthyl-phenol, 2,4-Diäthyl-phenol und 4-Äthyl-phenol, n- und i-Propyl-phenole, wie 2-Propylphenol, 4-Propyl-phenol, 2,4-Diisopropyl-phenol und 3,5-Diisopropyl-phenol, n-, i- und sec-Butyl-phenole, wie 3-n-Butylphenol, 2-sec-Butyl-phenol und 2,6-Di-sec-butyl-phenol, tert-Amyl-phenole, wie 2-tert-Amyl-phenol, 4-tert-Amyl-phenol und 2,6-Di-tert-amyl-4-methyl-phenol, höhere Alkylphenole, wie 2,4-Dimethyl-6-isononyl-phenol und 3-Pentadecyl-phenol, Aralkylphenole, wie 2-Benzylphenol, 4-Benzyl-phenol und 2,4-Dibenzyl-phenol, Indanole, wie 4-Indanol und 5-Indanol, und die zweiwertigen Phenole, wie Hydrochinon, Resorcin, Brenzcatechin, 2,2'-Dihydroxydiphenyl und 4,4'-Dihydroxydiphenyl. Beispiele für die entsprechenden Thioverbindungen sind u.a. Propylmercaptan, tert. Butylmercaptan, Dodecylmercaptan, Thiophenol, o-Thiokresol, 2-Mercapto-benzimidazol und 2-Mercapto-benzthiazol.

Im Rahmen der Komponente (C) (2) eignen sich als Kettenabbrecher auch gesättigte Monoalkohole, die ein tertiäres N-Atom enthalten, wie z.B. Dimethyläthanolamin. Weitere Verbindungen dieser Art sind zum Beispiel Diäthyläthanolamin, Dipropyläthanolamin, Dibutyläthanolamin, 4-(2-Hydroxyäthyl)-morpholin und Äthyloxäthylanilin.

Besonders vorteilhafte Ergebnisse werden erhalten, wenn die Komponente (C) (2) Allyl- oder Methallylalkohol, ein Norborneyl-, Cyclohexenyl-, Dihydropyranyl-, Cyclopentenyl-, Dicyclopentenyl-alkohol, tert.-Butylmercaptan und/ oder Dodecylmercaptan ist.

Die Mengenverhältnisse der Ausgangskomponenten (A), (B) und (C) werden so gewählt, daß im Harz der Gehalt der Polyaminoamidkomponente (A) zwischen 20 - 90 Gew.-%, vorzugsweise 40 - 70 Gew.-%, der Gehalt der Isocyanatkomponente (B) zwischen 5 - 60 Gew.-%, vorzugsweise 10 - 45 Gew.-% und bei Verwendung der Komponente(n) (C) deren Gehalt bis zu 60 Gew.-%, vorzugsweise bis zu 30 Gew.-% beträgt.

Die erfindungsgemäßen amidgruppenhaltigen Aminoharnstoffharze, die unneutralisiert als Amine und nach einer Umsetzung mit Säuren in neutralisierter Form als Salze vorliegen, können nach den verschiedensten Lackauftragsverfahren verarbeitet werden. Der basische N-Gehalt der Harze beträgt im allgemeinen 0,05 bis 5,0 Äquivalente/1000 g Harz, vorzugsweise 0,2 - 3,5 Äquivalente/1000 g Harz.

Werden sie in der Aminform angewendet, können sie als organische, wäßrig-organische oder wäßrige Lösungen bzw. Dispersionen bereitgestellt werden. Zu diesem Zweck sind sie z.B. in einem oder mehreren organischen Lösungsmitteln, wie einem Keton und Äther, gelöst. Solchen Lösungen kann auch Wasser, dessen Menge je nach Amingehalt schwanken kann, zugesetzt werden. Durch Verwendung von Dispergiermitteln lassen sich mit den als Aminen vorliegenden erfindungsgemäßen Harzen auch wäßrige Dispersionen herstellen. Als Tenside eignen sich anionische Tenside, wie Alkylsulfate, Alkylbenzolsulfo-

0134970
A3GW32056

nate und Sulfonbernsteinsäureester, kationische Tenside, wie Tetraalkylammonium-Salze und N,N-Dialkylimidazoline, und nichtionische Tenside, wie Alkyl- und Alkylphenylpolyäthylenglykoläther, Fettsäurealkylolamide und Saccharosefettsäureester. Auch mit Schutzkolloiden, wie Hydroxyäthylcellulose, Polyvinylalkohol und Polyvinylpyrrolidon, lassen sich wäßrige Dispersionen bereiten. Je nach der erforderlichen Viskosität, der gewünschten Schichtdicke und nach angewandtem Lackauftragsverfahren kann hierbei die Harzkonzentration im allgemeinen von 5 bis 60 Gew.-% variieren, die gegebenenfalls mit üblichen Lacklösungsmitteln und/oder unter Zusatz von Wasser in einfacher Weise auf die gewünschte Konzentration genau eingestellt werden kann. Selbstverständlich können derartigen Lösungen bzw. Dispersionen die üblichen Hilfsstoffe und Zusatzstoffe, wie Pigmente, Haftvermittler, Sikkative und Füllstoffe, eingearbeitet werden. Die in Rede stehenden Lösungen bzw. Dispersionen können auf dem zu lackierenden Gegenstand mittels üblicher Normal-Spritzverfahren, wie Niederdruck-, Hochdruck-, Airless- und Airmix-Spritzverfahren in Form von Kalt- und Heißspritzen, niedergeschlagen werden. Auch elektrostatische Sprühverfahren und konventionelles Tauchen sind anwendbar, desgleichen die sonstigen Beschichtungsverfahren, wie Streichen, Rollen, Wischen, Spachteln, Trommeln, Zentrifugieren/Schleudern, Fluten, Gießen, Walzen und Bandbeschichten.

Durch teilweise oder vollständige Neutralisation der Aminogruppen der erfindungsgemäßen amidgruppenhaltigen Aminoharnstoffharze, wodurch kationische Gruppen ausgebildet werden, können ebenfalls organische, wäßrig-organische oder wäßrige Lösungen bzw. Dispersionen bereitgestellt werden. Der Neutralisationsgrad des mit Säure umgesetzten basischen Harzes kann im allgemeinen bis zu 5, vorzugsweise bis zu 3 Äquivalenten/1000 g Harz betragen.

Setzt man z.B. den oben beschriebenen, in einem oder mehreren

organischen Lösungsmittel(n) gelösten und als Amine vorliegenden erfindungsgemäßen Harzen Säure, wie Essigsäure, Propionsäure, Milchsäure, Acrylsäure und Methacrylsäure, in Mengen bis zu 2 Mol Säure/1000 g Harz zu, erhält man die entsprechenden neutralisierten amidgruppenhaltigen Aminoharnstoffharze in organischer Lösung, die, falls gewünscht, mit Wasser verdünnt werden kann. Prinzipiell können die organischen, wäßrig-organischen oder wäßrigen, teilweise oder vollständig neutralisierten amidgruppenhaltigen Aminoharnstoffharz-Lösungen bzw. -Dispersionen, gegebenenfalls unter Zusatz von geringen Mengen, z.B. 5 - 8 Gew.-% üblicher Lacklösungsmittel, wie Äthylenglykol, Propylenglykol, Äthylenglykoläther, Äthylenglykolätheracetat und Äthylenglykolacetat, ebenso nach den üblichen Lackauftragsverfahren verarbeitet werden, die oben schon bei den Lösungen bzw. Dispersionen der unneutralisierten amidgruppenhaltigen Aminoharnstoffharze in spezifizierter Form beispielhaft genannt worden sind. Die Lösungen oder Dispersionen können selbstverständlich die oben schon beispielhaft erwähnten üblichen Hilfsstoffe und Zusatzstoffe enthalten.

Die Neutralisation der Aminogruppen der erfindungsgemäßen amidgruppenhaltigen Aminoharnstoffharze kann auch so durchgeführt werden, daß wasser-dispergierbare kataphoretisch abscheidbare Harze entstehen, die insofern bevorzugt nach dem kathodischen Elektrotauchlackieren (Kataphorese) verarbeitet werden. Zu diesem Zweck werden die Aminogruppen der auf der Basis der verschiedenen Variationsmöglichkeiten der Ausgangskomponenten (A) bis (C) hergestellten Harze mit einer Säure wenigstens teilweise, z.B. zu 10, 30, 50, 70, 80 oder 100%, zu Aminsalzgruppen umgesetzt und das Harz damit wasserdispergierbar gemacht. In diesem Zusammenhang wird angestrebt, daß der basische N-Gehalt des Harzes 0,5 - 2,5 Äquivalente/1000 g Harz und der Neutralisationsgrad des mit Säure umgesetzten Harzes 0,1 - 1 Äquivalent/1000 g Harz beträgt.

Die Bildung von Aminsalzgruppen wird in bekannter Weise mittels einer anorganischen, organischen, komplexbildenden oder nicht komplexbildenden Säure bewerkstelligt. Beispiele geeigneter Säuren, die auch als Gemische verwendet werden können, sind Carbonsäuren, wie Ameisensäure, Essigsäure, und Propionsäure, Glykolsäure, Milchsäure, Weinsäure, Acrylsäure, Methacrylsäure, Norborneylcarbonsäure, sowie anorganische Säuren wie Schwefel- und Phosphorsäure. Die Säure wird zur besseren Einarbeitung mit Wasser verdünnt zugegeben. Im allgemeinen verwendet man soviel Wasser, daß danach eine Suspension mit 50 - 80% Feststoffgehalt erhalten wird.

Außer Wasser kann das wäßrige Medium der besseren Löslichkeit bzw. Dispergierbarkeit wegen noch ein anderes Lösungsmittel enthalten. Derartige Lösungsmittel sind z.B. Ester, wie die Monomethyl-, Monoäthyl-, Monobutyl- und Monohexyläther der Äthylenglykolacetate, Ketone, wie Diäthylketon und Methylisobutylketon, oder Glykole, wie Äthylenglykol, Propylenglykol, Butylenglykol, Glykolmonoäther, wie Glykolmonomethyläther, Glykolmonoäthyläther und Propylenglykolmonomethyläther, Diäther von Glykolen oder Diglykolen, wie Diglykol-diäthyläther und Diglykol-di-n-butyläther, außerdem Tetrahydrofuran und Dioxan. Die Menge liegt im allgemeinen zwischen 2 und 20 Gew,-%, bezogen auf das Gesamtgewicht des wäßrigen Mediums.

Das Produkt mit einem Feststoffgehalt von 50 - 80 Gew,-% kann mittels herkömmlicher Mischtechniken unter weiterer Verdünnung mit Wasser je nach Anwendungsbereich als 15 bis 60 Gew.-%ige Dispersion mit Schwefel und/oder Sikkativen auf der Basis von Acetylacetonaten, Naphthenaten,

Oleaten oder Acetaten von Schwermetallverbindungen wie die des Vanadins, Kobalts, Mangans, Blei oder Zinks, und/oder Haftvermittlern, wie Alkylphosphite, Siloxane, Thioharnstoffe, Thionamide und Epoxyharze und/oder Pigmenten auf der Basis von Schwermetallverbindungen, wie $TiO_2$, $PbCrO_4$, $PbSiO_3$, Bleiacetat und $SrCrO_4$, und/oder Füllstoffen, wie $SiO_2$, Talkum und Ruß homogen vermischt werden, wodurch die Härte, die Korrosionsstabilität und die Haftung der eingebrannten Filme noch weiter erhöht wird. Darüber hinaus ist es ebenfalls möglich, den Schwefel und/oder die Sikkative und/oder die Pigmente und/oder die Haftvermittler unter Verwendung eines gekühlten Walzenstuhles mit der 50 bis 80 Gew.-%igen Harzdispersion gleichmäßig zu verreiben. Die erhaltene Mischung wird sodann in Wasser dispergiert und mit weiterem Wasser auf die in der Praxis übliche Konzentration von 5 - 60 Gew.-% verdünnt.

Die wäßrige Beschichtungsmasse, die für die Elektrotauchlackierung bevorzugt in Mengen von 1 bis 50 Gew.-%, bezogen auf das Harz, die oben erwähnten Stoffe Schwefel und/oder Sikkative und/oder Haftvermittler und/oder Pigmente und/oder Füllstoffe enthält, kann weiterhin die üblichen Hilfsmittel und Zusatzstoffe, wie oberflächenaktive Stoffe, Antiabsetzmittel, Antioxydantien und Farbstoffe enthalten. Die Dispersionen zeichnen sich durch gute Stabilität, hohe Durchbruchsspannung und gute Umgriffswerte aus. Das anwendungsfähige Überzugsmittel wird mit der Anode und dem zu beschichtenden elektrisch leitfähigen Substrat in Berührung gebracht, das als Kathode fungiert. Die zu ihrer Abscheidung auf der Kathode angewendete Spannung beträgt in der Regel 50 bis 700 Volt,

die anfängliche Stromdichte durch Strombegrenzung 0,1 bis 30 A/100 cm². Die genannten Bedingungen sind also im allgemeinen denjenigen ähnlich, die üblicherweise für die Abscheidung anderer kationischer Harze verwendet werden.

Nach dem Aufbringen der Beschichtungsmasse wird das aus Stahl, Aluminium, Kupfer oder einer Metall-Legierung bestehende Substrat in üblicher Weise gewaschen, getrocknet und anschließend zur Härtung auf eine Temperatur ab 100°C, vorzugsweise von 120 bis 140°C, erhitzt. Die erfindungsgemäßen selbstvernetzenden amidgruppenhaltigen Aminoharnstoffharze mit gegebenenfalls Urethangruppierungen gestatten es, Schichtdicken bis zu 40 - 50 µ zu erreichen, und das bei Verwendung niedrigerer Temperaturen als im Falle der bisher üblichen Isocyanatvernetzung. Sie sind nicht nur energiesparend, sondern auch umweltfreundlich, da in den erfindungsgemäßen Harzsystemen keine flüchtigen Polyisocyanatblockierungsmittel verwendet werden.

Infolge der erniedrigten Einbrenntemperatur ist es möglich, Metallteile, die Kunststoffeinbauten oder einseitige Kunststoffüberzüge aufweisen, mit diesen Kataphoreseharzen zu beschichten und in Anwesenheit dieser Kunststoffteile einzubrennen.

Die erzielten hohen Schichtdicken machen eine Zweischichtlackierung von Fahrzeugkarosserien möglich. Da bei der Härtung der selbstvernetzenden Harze keine Blockierungsmittel freigesetzt werden, ist es darüber hinaus bei der für bestimmte Zwecke erforderlichen Mehrfachbeschichtung möglich, die nächste Schicht ohne ein vorheriges Einbrennen der Kataphoresebeschichtung aufzutragen und beide Schichten gemeinsam einzubrennen (Naß in Naß-Auftragen).

Die Salzsprühtestwerte sind im allgemeinen gut. Phosphatierte Stahlbleche, die mit den unpigmentierten Filmen versehen wurden, zeigen selbst nach 240 Std. noch keine Unterwanderung am Kreuzschnitt.

Anhand der folgenden Beispiele wird die Erfindung näher erläutert.

I. Herstellung der Aminoalkylenamide A(1) (Tabelle 1)

In die organische Säure bzw. in das Säuregemisch gibt man bei 70 - 90°C das Alkylenpolyamin. Anschließend erhitzt man das dabei gebildete Aminsalz auf 170 - 180°C, wobei unter Wasserabspaltung die Amidbildung stattfindet. Neben der Amidbildung tritt mit fortschreitender Zeit bzw. bei höherer Temperatur die Imidazolin- bzw. Tetrahydropyrimidinbildung ein. Anhand des abgespaltenen Wassers läßt sich der Reaktionsverlauf verfolgen.

Die Bestimmung des gesamten basischen Amins erfolgt durch Titration mit n /10 $HClO_4$ in Eisessig/Methylenchlorid.

Im Falle der Herstellung des Ketimins versetzt man das Reaktionsgemisch nach der Amidbildung und dem teilweisen Ringschluß mit Keton und Toluol und kreist mit Hilfe eines Wasserabscheiders das Reaktionswasser aus. Überschüssiges Keton und Toluol werden anschließend unter Vakuum abgezogen.

## II. Allgemeine Vorschriften zur Herstellung der amidgruppenhaltigen Polyharnstoffe

1. Amidgruppenhaltige Aminoharnstoffharze (Tabelle 2 u.3)

1.1. Man löst die Polyaminamide A und die Amine C in der gleichen Gewichtsmenge MEK ( = Methyläthylketon) und gibt bei 20 - 30°C eine 50-%ige Lösung bzw. Suspension von Diisocyanat in MEK unter Rühren innerhalb von ca. 15 Minuten hinzu. Man läßt noch 15 Minuten bei Raumtemperatur nachreagieren.

1.2. Bei Verwendung von Triisocyanaten setzt man zunächst die Monoamine C(1) und/oder A(1) mit dem Triisocyanat in 50-%iger Lösung bei Raumtemperatur um und dosiert dieses Umsetzungsprodukt in die Polyaminamide A(2) und/oder A(1).

1.3. Monoisocyanate läßt man vorteilhaft zuerst mit den mehrfach funktionellen Polyaminamiden A(2) reagieren und führt die weitere aktion wie unter a oder b beschrieben durch.

2. Amidgruppenhaltige Aminoharnstoffharze mit Urethangruppierungen (Tabelle 4)

2.1. Verwendung von Hydroxyverbindungen

Man stellt zunächst das urethangruppenhaltige Isocyanat durch Reaktion des Diisocyanats mit der Hydroxyverbindung in gleichen Gewichtsteilen an

Methyläthylketon bei 50°C und einer Reaktionszeit von 1 Stunde her und tropft dann diese 50%-ige Lösung anschließend innerhalb von 15 Minuten unter Rühren bei 20 - 30°C in die 50%-ige Lösung der Polyaminoamide A in MEK. Man läßt noch ca. 15 Minuten nachreagieren.

2.2. Verwendung von Diolen und Monoalkoholen, die tertiäre Aminogruppen enthalten.

Man löst das Polyaminamid und das Diol gemeinsam in der 3-5-fachen Menge eines Lösungsmittels, wie Aceton, THF oder Dioxan und tropft bei Raumtemperatur innerhalb von 30 - 90 Minuten eine 20 - 30%-ige Lösung von Diisocyanat im gleichen Lösungsmittel zu. Anschließend gibt man die Monoalkohole als Kettenabbrecher zu. Die Nachreaktionszeit beträgt ca. 60 min.

## III. Herstellung der pigmentierten Lacke

### 1. Herstellung der Pigmentpaste

1.1. für organische Lösungslacke

Die gegebenenfalls mit organischer Säure versetzte 50 - 70%-ige Harzlösung wird

a) mit $TiO_2$, $SiO_2$, $Pb_2SiO_4$ und Ruß (Gewichtsverhältnis z.B. 1 : 0, 84 : 0, 21 : 0,04) oder

b) mit $TiO_2$, Talkum, Ruß und Bleisilikat (Gewichtsverhältnis 1 : 0, 63 : 0, 50 : 0,15)

vermischt und auf dem gekühlten Dreiwalzstuhl bzw. in der gekühlten Sandmühle innig verrieben. Das Gewichtsverhältnis von Bindemittelfeststoff zu der Mischung der Pigmente beträgt 1 : 1.

1.2. für wäßrige Dispersionen

$TiO_2$, Talkum, Ruß und Bleisilikat (Gewichtsverhältnis 1 : 0,63 : 0,5 : 0,15) oder $TiO_2$, $SiO_2$, Bleisilikat und Ruß (Gewichtsverhältnis 1 : 0,84 : 0,21 : 0,04) werden mit der doppelten Menge der mit Essigsäure teilneutralisierten (0,2 - 1 mMol AcOH/g Feststoff) 50%-igen Harzsuspension (Gewichtsverhältnis MEK : Wasser = 1 : 0,73) vermischt und auf einem gekühlten Walzenstuhl mehrmals innig verrieben.

2. <u>Einarbeiten der Pigmentpasten</u>

Die unter a und b beschriebenen Pigmentpasten werden entweder unter Zusatz üblicher Lacklösungsmittel mit den Harzlösungen oder mit den wäßrigen Dispersionen, die 0,1 - 2 mMol AcOH/g Feststoff enthalten, so vermischt, daß je nach Anwendungsbereich (wie Tauchen, Spritzen, Elektrotauchlackieren u.a.) ein Lack mit einem Gesamtfeststoffgehalt von ca. 15 - 50% resultiert. Das Gewichtsverhältnis von Bindemittel zu Pigment beträgt hierfür 1 : 0,16 bis 1 : 0,26.

## IV. Anwendung der Harzkompositionen

### 1. Kompositionen in Lösung

#### 1.1. für Spritzlackierung (Tabelle 5)

Die gegebenenfalls bis zu 1 Mol/1000 g Feststoff mit organischer Säure versetzten Harzlösungen bzw. Lacklösungen werden mit geeigneten Lösungsmitteln wie MEK, MIBK, Äthylenglykol, Propylenglykol, Äthylenglykolacetat oder Lösungsgemischen auf eine Spritzviskosität von 20 - 23 sec. nach DIN Becher 4 (DIN 53 211) verdünnt und unter ca. 2,5 atü mit einer handelsüblichen Spritzpistole auf Stahlbleche mit einer durchschnittlichen Trockenfilmdicke von 40 µ aufgesprüht. Nach 10 - 15 min. Ablüftung wird das beschichtete Material 30 Min. bei 140°C eingebrannt. Es werden glatte, transparente und glänzende Filme erhalten mit sehr guten Resultaten im Gitterschnitt (DIN 53 151) und konischen Dornbiegetest (ASTM D 522)

#### 1.2. für Tauchlackierung (Tabelle 6)

Die gegebenenfalls mit organischer Säure versetzten Harzlösungen bzw. Lacklösungen werden auf eine Auslaufviskosität von ca. 40 - 50 sec. nach DIN Becher 4 gebracht (das entspricht im allgemeinen einer Feststoffkonzentration von 50 - 60%). Der zu beschichtende Körper wird darin getaucht und anschließend abtropfen gelassen und bei 140°C 30 min. eingebrannt,

wodurch ein Film einer durchschnittlichen Dicke von 30 µm mit vergleichbaren Eigenschaften wie unter 1.1. erwähnt, erhalten wird.

2. Kompositionen in wäßriger Suspension

2.1. für Elektrotauchbeschichtung (Tabelle 7)

Die nach II hergestellten Harzlösungen werden mit der 4-fachen Menge, bezogen auf Feststoff, an entionisiertem Wasser vermischt, mit 0,3 mMol Essigsäure/g Feststoff versetzt und bei Raumtemperatur 3 - 4 Tage im offenen Gefäß gerührt. Danach wird das Harz kataphoretisch auf Metall abgeschieden, die aufgetragene Schicht mit Wasser nachgewachen, trockengeblasen und 30 min. eingebrannt.

Zusätze wie Siccative und gegebenenfalls Haftvermittler und/oder feinstverteilter Schwefel setzt man zweckmäßig der Harzlösung vor der Verdünnung mit Wasser zu. Sie können aber auch in die wäßrige Dispersion eingearbeitet werden.

Zur Beschichtung mit Elektrotauchlacken verdünnt man die mit der Pigmentpaste versetzte Harzdispersion (III/2) mit entionisiertem Wasser bis auf eine Feststoffkonzentration von ca. 20%. Zusätze, wie Siccative und gegebenenfalls Haftvermittler und/oder Schwefel, arbeitet man möglichst in die Pigmentpaste mit ein; man kann sie aber auch der ca. 20%-igen Lackdispersion zusetzen. Man läßt anschließend die wäßrige Lackdispersion 3 - 4 Tage im offenen

Gefäß rühren und scheidet dann den Lack auf Metallgegenstände kataphoretisch ab, die man anschließend mit Wasser nachspült und 30 min. im Ofen einbrennt.

2.2. für Spritzlackierung (Tabelle 8)

Die nach II hergestellten Harzlösungen werden mit Wasser und Essigsäure (0,1 - 2 mMol/g Feststoff) soweit verdünnt, daß nach dem Abdunsten des organischen Lösungsmittels durch dreitägiges Rühren bei Raumtemperatur eine 40%-ige wäßrige Dispersion resultiert. Diese Dispersion wird durch Zugabe von weiterem Wasser und gegebenenfalls bis zu 10% mit geeigneten Lösungsmitteln,wie Glykole,Glykoläther und Glykolätheracetate,auf eine Auslaufviskosität von 20 - 50 sec. verdünnt. Diese Dispersionen enthalten dann etwa 30 - 40% Feststoff. Sie werden mit Hilfe einer Spritzpistole bei ca. 2,5 atü auf das zu beschichtende Stahlblech aufgesprüht. Nach 10 - 15 min. Ablüften wird das beschichtete Material im Ofen 30 min. bei 140° eingebrannt. Man erhält sehr gut verlaufene, glänzende und sehr gut haftende Filme.

Zusätze wie Siccative und/oder Haftvermittler arbeitet man zweckmäßig in die Harzlösung ein.

2.3. für Tauchlackierungen (Tabelle 9)

Die nach II hergestellten und mit Siccativen und gegebenenfalls mit Haftvermittlern versetzten organischen Lösungen werden mit etwa einem Drittel an

Wasser und 0,3 mMol Essigsäure pro g Feststoff versetzt. Anschließend zieht man das leichtsiedende MEK bei Raumtemperatur im Vakuum weitgehend ab und versetzt dann mit weiterem Wasser und gegebenenfalls mit geringen Mengen an höhersiedenden Lösungsmitteln, wie Glykol, Glykoläther, Glykolätheracetate oder MIBK, bis zu der gewünschten Tauchviskosität von 40 - 50 sec. Auslaufzeit (DIN-Becher 4).

Das zu beschichtende Metallblech wird darin eingetaucht und nach Abtropfenlassen und Ablüften im Ofen 30 min. bei 140°C eingebrannt. Es resultieren gleichmäßige Filme mit guten mechanischen Eigenschaften.

Für den Fall der pigmentierten Dispersionen mischt man die nach III/1.1. b hergestellten Pigmentpasten mit den von MEK befreiten wäßrigen Dispersionen, versetzt mit den angegebenen Lösungsmitteln und mit Wasser bis zu einer Viskosität von ca. 50 sec. Auslaufzeit nach DIN Becher 4.

## V. Abkürzungen in den Tabellen 1- 4

### 1. Für Umsetzungsprodukte mit Polyaminen

I a = Versamid 140 Handelsprodukt von Schering
I b = Versamid 115 Handelsprodukt von Schering
I c = Versamid 100 Handelsprodukt von Schering
I d = Euredur 370 Handelsprodukt von Schering
I e = Euredur 200 Handelsprodukt von Schering

(Versamid und Euredur = Handelsnamen für reaktive Polyamidharze (Polyaminoamide und Polyaminoimidazoline) ).

| | | | Gesamtaminzahl |
|---|---|---|---|
| II a | = | 1 DETA · 2 Ric | 108 |
| II b | = | 1 DETA · 1,6 Ric · 0,4 MIBK | 143 |
| III a | = | 1 TETA · 2 Ric | 192 |
| III b | = | 1 TETA · 2 Ric | 171 |
| III c | = | 1 TETA · 2 Stearinsäure | 156 |
| III d | = | 1 TETA · 1,4 Ric · 0,6 AcOH | 209 |
| III e | = | 1 TETA · 1 Ric · 0,5 Dimerfettsäure | 162 |
| IV | | $N_4$ · 2 Ric | 180 |

2. Weitere Stoffabkürzungen

DETA = Diäthylentriamin
TETA = Triäthylentetramin
$N_4$ = N,N'-Bis(3-aminopropyl)-äthylendiamin
AcOH = Essigsäure
(ac) = Acetat
Stearin-Me = Stearinsäuremethylester
Ric-Me = Ricinensäuremethylester
Ric = Ricinenfettsäure
MIBK = Methylisobutylketon
Dimerfettsäure von Shell
Dimer-Me = Dimerfettsäure-dimethylester
TDI = 2,4- bzw. 2,6-Diisocyanatotoluol (Gemisch)
MDI = 4,4'-Diisocyanato-diphenylmethan
Desmodur N = Biuret des Hexamethylendiisocyanats - Handelsprodukt von Bayer
$V(aca)_3$ = Vanadin(III)acetylacetonat
THF = Tetrahydrofuran

**T a b e l l e 1**

**Herstellung der Aminoalkylenamide A(1) für die Tabellen 2 - 4**

| Lfd. Nr. | Produkt Nr. | Poly-amin | Gewicht (g) | Säurekomponente | Gewicht (g) | Blockierungsmittel | Gewicht (g) | Molverhältnis | Reakt. temp. (°C) | Reakt. zeit (min) | Druck (Torr) | Ges.-Amin-zahl |
|---|---|---|---|---|---|---|---|---|---|---|---|---|
| 1 | II a | DETA | 103 | Ric | 540 | - | - | 1:2 | 180 | 105 | 760 | 102 |
| 2 | II b | " | 361 | " | 1512 | MIBK | 120 | 1:1,6<br>1:1,6:0,4 | 175<br>170<br>120 | 90<br>60<br>45 | 760<br>760<br>30 | 153 |
| 3 | III a | TETA | 44 | Ric-Me | 170 | - | - | 1:2 | 150<br>150 | 180<br>120 | 50 | 192 |
| 4 | III b | " | 73 | Ric | 270 | - | - | 1:2 | 180 | 105 | 760 | 171 |
| 5 | III c | " | 29 | Stearins.-Me | 119 | - | - | 1:2 | 160 | 210 | 30 | 156 |
| 6 | III d | " | 146 | Ric + AcOH | 379+36 | - | - | 1:1,4:0,6 | 180 | 150 | 760 | 209 |
| 7 | III e | " | 59 | Ric+Dimer-Me | 108+114 | - | - | 1:1:0,5 | 170 | 240 | 25 | 162 |
| 8 | IV | $N_4$ | 52 | Ric | 162 | - | - | 1:2 | 170 | 360 | 30 | 180 |

T a b e l l e 2

Amidgruppenhaltige Aminoharnstoffharze

- Herstellung aus A und B -

| Harz Nr. | Polyaminamide A A(1) | % | A(2) | % | Isocyanat B Art | % | Aminzahl |
|---|---|---|---|---|---|---|---|
| H-1 | II a | 55 | I a | 29 | TDI | 16 | 76 |
| H-2 | II a | 55 | I d | 28 | " | 17 | 58 |
| H-3 | II b | 53 | I d | 28 | " | 19 | 108 |
| H-4 | IIa + IIIb | 12 + 37 | I e | 33 | " | 18 | 125 |

Tabelle 3

Amidgruppenhaltige Aminoharnstoffharze - Herstellung aus A und B und C(1) -

| Harz-Nr. | Polyaminamide A A(1) | % | A(2) | % | Isocyanate B Art | % | Aminkomponenten C(1) Art | % | Amin-zahl |
|---|---|---|---|---|---|---|---|---|---|
| H-5 | IIIb | 61 | | | TDI | 25 | Diallylamin | 14 | 79 |
| H-6 | | | I b | 51 | " | 28 | " | 21 | 81 |
| H-7 | | | I c | 67 | " | 20 | " | 13 | 36 |
| H-8 | | | IIIe | 69 | " | 21 | " | 10 | 89 |
| H-9 | II a | 50 | I a | 20 | " | 24 | Allylamin | 6 | 57 |
| H-10 | IIIb | 35 | I a | 24 | " | 28 | Diallylamin | 13 | 102 |
| H-11 | II a | 43 | I b | 27 | " | 21 | " | 9 | 59 |
| H-12 | II a | 50 | I b | 15 | " | 24 | " | 11 | 71 |
| H-13 | IV | 50 | I b | 15 | " | 24 | " | 11 | 68 |
| H-14 | IIIb+<br>IIId | 24+11 | I a | 24 | " | 28 | " | 13 | 100 |
| H-15 | IIIc | 53 | I b | 15 | " | 22 | Di-n-propylamin | 10 | 71 |
| H-16 | IIIb | 50 | I b | 16 | " | 24 | t-Butylamin | 10 | 74 |
| H-17 | IIIb | 47 | I b | 14 | " | 22 | Di-n-butylamin | 17 | 76 |
| H-18 | IIIb | 49 | I b | 15 | " | 24 | Piperidin | 12 | 66 |
| H-19 | IIIb | 42 | I b | 13 | " | 27 | 1,6-Diaminohexan + Diallylamin | 8 + 9 | 54 |
| H-20 | IIIb | 41 | I b | 13 | " | 27 | 4,4'-Diaminodiphenylsulfon<br>+ Diallylamin | 9+10 | 46 |
| H-21 | IIIb | 45,5 | I b | 14 | " | 26 | 4,4'-Diaminodiphenylmethan<br>+ Diallylamin | 4,5<br>10 | 58 |
| H-22 | IIIb | 45,5 | I b | 14 | " | 26 | 1,10-Diamino-4,7-dioxadecan<br>+ Diallylamin | 4,5<br>10 | 49 |
| H-23 | IIIb | 33,5 | I c | 33,5 | MDI | 23 | Diallylamin | 10 | 60 |
| H-24 | II a | 50 | I b | 15 | Desmodur N | 27 | " | 8 | 55 |
| H-25 | II a | 51 | I b | 16 | Desmodur N | 28 | " | 5 | 38 |
| H-26 | II a | 30 | I b | 18 | Desmodur N<br>+Phenylisocy-<br>anat | 24<br>22 | " | 6 | 25 |

**T a b e l l e 4**

**Amidgruppenhaltige Aminoharnstoffharze mit Urethangruppierungen**

- Herstellung aus A und B und C (2) -

| Harz Nr. | Polyaminamide A | | | | Isocyanate B | | Hydroxyverbindungen C (2) | | Amin-zahl |
|---|---|---|---|---|---|---|---|---|---|
| | A(1) | % | A(2) | % | Art | % | Art | % | |
| H-27 | II a | 44 | I a | 17 | TDI | 29 | Allylalkohol | 10 | 31 |
| H-28 | II a | 49 | I a | 20 | " | 23 | Methallylalkohol | 8 | 51 |
| H-29 | II a | 46 | I a | 19 | " | 22 | Hydroxymethylennorbornen | 13 | 44 |
| H-30 | III a | 40 | | | MDI | 38 | Dicyclopentenyl-glyceryl-1-bisglykoläther + Dimethyläthanolamin | 16 + 6 | 71 |

T a b e l l e 5

Spritzlackierungen der Kompositionen in Lösung (Sikkativ: 1 % V(III)-acetylacetonat, bezogen auf Bindemittel)

| Harz-Nr. | Neutralisationsmittel | Neutral.-grad Mol/1000 g | Verdünnung g MIBK/100 g Harzlösung | Feststoffgehalt % | Auslaufviskosität (sec) | Filmhärte sec (nach König) DIN 53 157 | Rubtest MIBK |
|---|---|---|---|---|---|---|---|
| H-11 | - | - | 50 | 34,5 | 22 | 105 | > 100 |
| H-23 | - | - | 33 | 37,5 | 21 | 98 | > 100 |
| H-11 | Essigsäure | 0,5 | 50 | 34,5 | 21 | 133 | > 100 |
| H-23 | " | " | 33 | 37,5 | 21 | 92 | > 100 |

## T a b e l l e 6

**Tauchlackierungen der Kompositionen in Lösung**

| Harz-Nr. | Zusätze | % bezogen auf Feststoff | Gehalt an Essigsäure (Mol/1000g) | Feststoff-gehalt (%) | Auslauf-zeit (sec) | Schicht-dicke (µ) | Pendel-härte n.König (sec) | Rubtest MIBK | Gitter-schnitt | Dornbiege-test |
|---|---|---|---|---|---|---|---|---|---|---|
| H-11 | $V(aca)_3$ | 1 | - | 58 | 50 | 29 | 116 | >100 | in Ordnung | in Ordnung |
| H-11 | " | 1 | 0,25 | 57 | 50 | 29 | 109 | >100 | " | " |
| H-11 | $Co(ac)_2$, $Pb(ac)_2$ +Pigment-paste a* | 1 + 1 +50** | - | 53 | 50 | 28 | 131 | >100 | " | " |

* Pigmentpaste nach III/1.1 a

** Gehalt an Gesamtfeststoff (Harz + Pigmente)

Das Verhältnis von Bindemittel zu Pigment beträgt 1 : 0,2

# Tabelle 7

## Elektrotauchbeschichtungen mit Kompositionen in wäßriger Suspension

| Harz-Nr. | Zusätze (Siccative und Haftvermittler) | % (1) | Durchbruchsspannung (V) | Abscheidungsspannung (V) | Einbrenntemp. (°C) | Schichtdicke (µ) | Rubtest (2) | Pendelhärte n.König (sec) | Biegetest (3) | Salzsprühtest (4) |
|---|---|---|---|---|---|---|---|---|---|---|
| H-11 | $V(aca)_3$ | 1 | 350 | 300 | 140 | 30 | + | 120 | 0 | 0 |
| | | | | | 130 | 30 | + | 116 | 0 | 0 |
| H-12 | $V(aca)_3$ | 1 | 300 | 300 | 140 | 30 | + | 181 | 3 | 2 |
| H-12 | $V(aca)_3$+Epoxypolybutadien (5) | 1+5 | 300 | 280 | 140 | 30 | + | 153 | 1 | 0 |
| | | | | | 130 | 31 | + | 148 | 1 | 0 |
| H-12 | $V(aca)_3$+Thioharnstoff | 1+7,5 | 400 | 300 | 140 | 32 | + | 155 | 1 | 0 |
| | | | | | 130 | 33 | + | 181 | 1 | 0 |
| H-12 | $V(aca)_3$+Epoxyharz (6) | 1+25 | 350 | 300 | 140 | 32 | (+) | 147 | 1 | 1 |
| H-12 | $V(aca)_3$+Bi $(ac)_3$ | 1+1 | 400 | 300 | 140 | 40 | + | 151 | 1 | 0 |
| | | | | | 130 | 40 | + | 137 | 1 | 0 |
| H-12 | $V(aca)_3$+Cu $(ac)_2$ | 1+1 | 350 | 300 | 140 | 33 | + | 164 | 1 | 0 |
| | | | | | 130 | 34 | + | 148 | 1 | 0 |
| H-12 | Co $(ac)_2$+Pb $(ac)_2$ (7) +Hexamethylenphosphit (8) | 1+1 +7,5 | 200 | 150 | 140 | 22 | + | 130 | 1 | 0 |
| H-12 | $V(aca)_3$+Allylphosphit | 1+8 | 400 | 300 | 140 | 24 | + | 172 | 1 | 0 |
| | | | | | 130 | 24 | + | 176 | 1 | 0 |
| H-19 | $V(aca)_3$ | 1 | 400 | 300 | 140 | 25-30 | + | 156 | 1 | 0 |
| H-20 | $V(aca)_3$ | 1 | 475 | 300 | 140 | 20-60 | + | 155 | 2 | 7 |
| H-21 | $V(aca)_3$ | 1 | 450 | 300 | 140 | 28-65 | + | 188 | 1 | 8 |
| H-22 | $V(aca)_3$ | 1 | 450 | 300 | 140 | 30-40 | + | 140 | 1 | 3 |
| H-23 | $V(aca)_3$ | 1 | 400 | 300 | 140 | 32 | + | 105 | 0 | 0 |
| H-23 | $V(aca)_3$+Epoxyharz (6) | 1-25 (9) | 450 | 300 | 140 | 31 | (+) | 95 | 0 | 0 |
| H-17 | Co $(ac)_2$+Pb $(ac)_2$+Pigmentpaste b | 2+2+40 (9) | 300. | 250 | 140 | 33 | + | 137 | 1 | 0 |
| H-18 | Co $(ac)_2$+Pb $(ac)_2$+Pigmentpaste a | 2+2+70 | 400 | 300 | 140 | 26 | + | 146 | 1 | 0 |
| H-25 | $V(aca)_3$ | 1 | 450 | 300 | 140 | 34 | + | 50 | 0 | 0 |
| H-24 | $V(aca)_3$ | 1 | 300 | 200 | 140 | 34 | + | 44 | 0 | 0 |

Zur Abscheidung verwendetes Material: Zinkphosphatierte Eisenbleche = Bonder 101
Einbrennzeit: 30 min. im Umluftofen

Erläuterungen zur Tabelle 7

① % Zusatz auf Bindemittelfeststoff bezogen

② Rubtest: 100 Doppelhülse mit MIBK befeuchtetem Filz unter 500 g Belastung:
- \+ in Ordnung
- (+) leichter Angriff

③ Biegetest über eine Tischkante:
- 0 = keinerlei Veränderung durch Dehnung
- 1 = Sichtbarwerden schwacher Streifen
- 2 = Streifen stark sichtbar
- 3 = Streifen platzen ab

④ Salzsprühtest: 240 Std. bei 35 - 36° mit 5%-iger NaCl-Lösung nach DIN 50 021

⑤ Epoxypolybutadien (Nisso BF 1000) = Handelsprodukt von Nisso

⑥ Epoxyharz = Umsetzungsprodukt von Epikote 1000 mit einem hochcyclisierten Reaktionsprodukt aus 1 Mol DETA und 2 Mol Ricinensäure

⑦ "Hexamethylenphosphit" = $(O{=}\underset{Et}{\overset{Et}{P}}-\underset{Et}{\overset{Me}{C}}-NH-CH_2-CH_2-CH_2-)_2$

⑧ Allylphosphit: $CH_2{=}CH-CH_2-P(O)\ (OEt)_2$

⑨ Menge an Feststoff der Pigmentpaste (Pigment u Bindemittel), Pigmentpaste siehe unter III/1.1 a und III/1.1 b

T a b e l l e 8

Spritzlackierung der Kompositionen in wäßriger Suspension
(Sikkativ : 1% V (III)-acetylacetonat, bezogen auf Bindemittel)

| Harz-Nr. | Neutralis.-mittel | Neutr.-Grad mMol/g | Feststoff-gehalt % | Auslauf-viskosität (sec) | Filmhärte nach König (sec) | Rubtest MIBK |
|---|---|---|---|---|---|---|
| H-11 | Essigsäure | 0,1 | 32 | 27 | 90 | >100 |
| H-11 | " | 0,25 | 30 | 31 | 85 | >100 |
| H-11 | " | 0,5 | 40 | 42 | 126 | >100 |
| H-11 | " | 1,0 | 30 | 28 | 92 | >100 |
| H-11 | " | 2,0 | 27 | 30 | 90 | >100 |
| H-23 | " | 0,25 | 30 | 34 | 125 | >100 |
| H-23 | " | 0,5 | 30 | 40 | 134 | >100 |

**Tabelle 9**

**Tauchlackierungen der wäßrigen Dispersionen**

| Harz Nr. | Zusätze Art | % a. Feststoff bezogen | Gehalt an Essigsäure (Mol/1000g) | Auslaufviskosität (sec) | Feststoffgehalt (%) | $H_2O$-Gehalt (%) | Lösungsmittel Art | % | Schichtdicke (µ) | Pendelhärte nach König (sec) | Rubtest MIBK | Gitterschnitt | Dornbiegetest |
|---|---|---|---|---|---|---|---|---|---|---|---|---|---|
| H-11 | $V(aca)_3$ | 1 | 0,3 | 50 | 51 | 42 | MIBK | 7 | 29 | 123 | >100 | i.O. | i.O. |
| H-23 | $V(aca)_3$ | 1 | 0,3 | 50 | 55 | 39 | MIBK | 6 | 31 | 129 | >100 | " | " |
| H-11 | $Co(ac)_2$+ $Pb(ac)_2$+ Pigmentpaste b* | 1+1 +50 | 0,3 | 51 | 50 | 38 | MEK, Propylenglykol | 8+4 | 30 | 135 | >100 | " | " |
| H-23 | $Co(ac)_2$+ $Pb(ac)_2$+ Pigmentpaste b* | 1+1 +50** | 0,3 | 50 | 53 | 34 | MEK, Propylenglykolmethyläther | 9+4 | 31 | 138 | >100 | " | " |

* Pigmentpaste nach III/1.:1.b
Das Verhältnis von Bindemittel zu Pigment beträgt 1 : 0,2

** Gehalt an Gesamtfeststoff (Harz + Pigmente)

i.O. = in Ordnung

## Patentansprüche

1. Flüssige Beschichtungskompositionen auf der Basis von amidgruppenhaltigen Aminoharnstoffharzen mit gegebenenfalls Urethan- oder Thiourethangruppierungen, dadurch gekennzeichnet, daß sie das Reaktionsprodukt von mindestens

(A) einem Polyaminoamid, das aus

(1) einer oder mehreren Monocarbonsäuren mit 1 - 24 C-Atomen und/oder

(2) Dicarbonsäuren mit 2 - 40 C-Atomen, gegebenenfalls im Gemisch mit Tricarbonsäuren, und einem oder mehreren Alkylen- oder Polyaminen mit 2 - 8 primären und/oder sekundären Aminogruppen und 2 - 20 C-Atomen hergestellt worden ist,

wobei das Polyaminoamid gegebenenfalls teilweise unter Wasserabspaltung entstandene cyclische Aminidingruppierungen und/oder als Ketimin blockierte Aminogruppen enthält,

(B) einem oder mehreren organischen Isocyanat(en) mit 1 bis 4 Isocyanatgruppen und 2 - 48 C-Atomen und gegebenenfalls von

(C) (1) einem oder mehreren primären oder sekundären gesättigten oder ungesättigten Mono- oder Diamin(en) und/oder

(2) einem oder mehreren gesättigten oder ungesättigten Mono- oder Dihydroxyverbindungen oder den entsprechenden Mercaptoverbindungen

darstellen und in der Aminform oder nach Ausbildung von kationischen Gruppen durch Umsetzung mit einer Säure als organische, wäßrig-organische oder wäßrige Lösungen bzw. Dispersionen vorliegen.

2. Beschichtungskompositionen nach Anspruch 1, dadurch gekennzeichnet, daß sie das Reaktionsprodukt von mindestens

(A) einem Polyaminoamid, das aus

(1) einer oder mehreren überwiegend höheren Fettsäure(n) und einem oder mehreren Polyaminen und/oder
(2) Dicarbonsäuren, gegebenenfalls im Gemisch mit Tricarbonsäuren und/oder mit vorwiegend höheren, im wesentlichen ungesättigten Fettsäuren,und einem oder mehreren Polyaminen hergestellt worden ist,

wobei das Polyaminoamid gegebenenfalls teilweise unter Wasserabspaltung entstandene cyclische Aminidingruppierungen und/oder als Ketimin blockierte Aminogruppen enthält.

(B) einem oder mehreren organischen Isocyanat(en) mit 1 bis 4 Isocyanatgruppen und gegebenenfalls von

(C) (1) einem oder mehreren primären oder sekundären gesättigten oder ungesättigten Mono- oder Diamin(en) und/oder

(2) einem oder mehreren gesättigten oder ungesättigten Mono- oder Dihydroxyverbindungen oder den entsprechenden Mercaptoverbindungen

darstellen und in der Aminform oder nach Ausbildung von kationischen Gruppen durch Umsetzung mit einer Säure als organische, wäßrig-organische oder wäßrige Lösungen bzw. Dispersionen vorliegen.

3. Beschichtungskompositionen nach Anspruch 2, dadurch gekennzeichnet, daß die Komponente A (1) ein Reaktionsprodukt aus Ricinenfettsäuren oder Ricinenfettsäuren und Essigsäure oder Stearinsäure mit einem oder mehreren Alkylen- bzw. Polyalkylenpolyaminen der Formel

$$H_2N - (CH_2 - CH_2 - NH)_n - CH_2 - CH_2 - NH_2,$$

worin n = 0 und/oder 1 und/oder 2 und/oder 3 bedeuten, und/oder

$$H_2N-(CH_2-CH_2-CH_2-NH)_n-R-NH-CH_2-CH_2-CH_2-NH_2,$$

worin n = 0 und/oder 1 und R eine Alkylengruppe mit 2 bis 6 C-Atomen oder Diäthylenamin $-CH_2-CH_2-NH-CH_2-CH_2-$

bedeuten, ist und das Reaktionsprodukt gegebenenfalls zusätzlich teilweise unter Wasserabspaltung entstandene Imidazolin-und/oder Tetrahydropyrimidinringe und/oder Ketimingruppen enthält.

4. Beschichtungskompositionen nach den Ansprüchen 2 bis 3, dadurch gekennzeichnet, daß die Komponene A(2) ein Reaktionsprodukt aus Dimerfettsäuren und gegebenenfalls Tallölfettsäuren oder Ricinenfettsäuren mit einem oder mehreren Polyalkylen-polyaminen der Formeln

$$H_2N-(CH_2-CH_2-NH)_n-CH_2-CH_2-NH_2 \quad \text{und/oder}$$

$$H_2N-(CH_2-CH_2-CH_2-NH)_m-R-NH-CH_2-CH_2-CH_2-NH_2,$$

worin n = o und/oder 1 und/oder 2 und/oder 3 und m = O und/oder 1 und R eine Alkylengruppe von 2 - 6 C-Atomen oder Diäthylenamin-$CH_2-CH_2-NH-CH_2-CH_2-$ bedeuten, ist und das Reaktionsprodukt gegebenenfalls teilweise unter Wasserabspaltung entstandene Imidazolinringe und/oder Tetrahydropyrimidinringe und/oder Ketimingruppen enthält.

5. Beschichtungskompositionen nach den Ansprüchen 2 bis 4, dadurch gekennzeichnet, daß die Komponente (B) ein Gemisch aus 2,4- und 2,6-Diisocyanato-toluol und/oder 4,4'-Diisocyanato-diphenylmethan oder ein Gemisch dieser Diisocyanate mit einem Monoisocyanat darstellt.

6. Beschichtungskompositionen nach den Ansprüchen 2 bis 5, dadurch gekennzeichnet, daß die Komponente (B) ein

Triisocyanat oder ein Gemisch aus einem Triisocyanat und einem Mono- und/oder Diisocyanat darstellt.

7. Beschichtungskompositionen nach den Ansprüchen 2 bis 6, dadurch gekennzeichnet, daß die Komponente (C) (1) Allylamin, Diallylamin, Di-n-propylamin, Di-n-butylamin, Di-i-butylamin, Piperidin, Hexamethylendiamin, Diaminodiphenylsulfon, Diaminodiphenylmethan, 4,9-Dioxadodecan-1,12-diamin und/oder 4,7-Dioxadecan-1,10-diamin ist.

8. Beschichtungskompositionen nach den Ansprüchen 2 bis 7, dadurch gekennzeichnet, daß die Komponente (C) (2) Allyl- oder Methallylalkohol, ein Norborneyl-, Cyclohexenyl-, Dihydropyranyl-, Cyclopentenyl-, Dicyclopentenyl-alkohol, tert.-Butylmercaptan und/oder Dodecylmercaptan ist.

9. Beschichtungskompositionen nach den Ansprüchen 2 bis 8, dadurch gekennzeichnet, daß im Harz der Gehalt der Polyaminoamidkomponente(n) (A) zwischen 20 - 90 Gew.-%, der Gehalt der Isocyanatkomponente(n) (B) zwischen 5 und 60 Gew.-% und bei Verwendung der Komponente(n) (C) deren Gehalt bis zu 60 Gew.-& beträgt.

10. Beschichtungskompositionen nach den Ansprüchen 2 bis 9, dadurch gekennzeichnet, daß der basische N-Gehalt des Harzes 0,05 - 5,0 Äquivalente/1000 g Harz und der Neutralisationsgrad des mit Säure umgesetzten basischen Harzes bis zu 5 Äquivalente/1000 g Harz beträgt.

11. Beschichtungskompositionen nach den Ansprüchen 2 bis 10,dadurch gekennzeichnet, daß die organische Harzlösung oder die wäßrige Harzdispersion Schwefel und/oder Sikkative auf der Basis von Acetylacetonaten, Naphthenaten, Oleaten und/oder Acetaten von Schwermetallverbindungen und/oder Haftvermittler und/oder Pigmente auf der Basis von Schwermetallverbindungen und/oder Füllstoffe enthält.

12. Verwendung der Beschichtungskompositionen gemäß den Ansprüchen 1 bis 11 als Beschichtungsstoff für nach üblichen Lackauftragsverfahren zu beschichtende Objekte.

13. Verwendung der Beschichtungskompositionen gemäß Anspruch 12 zum konventionellen Spritzlackieren und Tauchen von zu beschichtenden Objekten.

14. Verwendung der wäßrigen Beschichtungskompositionen gemäß den Ansprüchen 1 bis 11 zum kathodischen Elektrotauchlackieren von zu beschichtenden Objekten.

Patentansprüche
für Oesterreich

1. Verfahren zur Beschichtung von Gegenständen mittels flüssiger Beschichtungskompositionen auf der Basis von amidgruppenhaltigen Aminoharnstoffharzen mit gegebenenfalls Urethan- oder Thiourethangruppierungen, die beim Einbrennen keine flüchtigen Polyisocyanatblockierungsmittel abspalten, dadurch gekennzeichnet, daß man auf dem zu lackierenden Gegenstand mittels konventioneller Lackauftragsverfahren eine Beschichtungskomposition aufträgt, die das Reaktionsprodukt von mindestens

(A) einem Polyaminoamid, das aus

(1) einer oder mehreren Monocarbonsäuren mit 1 - 24 C-Atomen und/oder

(2) Dicarbonsäuren mit 2 - 40 C-Atomen, gegebenenfalls im Gemisch mit Tricarbonsäuren, und einem oder mehreren Alkylen- oder Polyaminen mit 2 - 8 primären und/oder sekundären Aminogruppen und 2 - 20 C-Atomen hergestellt worden ist,

wobei das Polyaminoamid gegebenenfalls teilweise unter Wasserabspaltung entstandene cyclische Amidingruppierungen und/oder als Ketimin blockierte Aminogruppen enthält,

(B) einem oder mehreren organischen Isocyanat(en) mit 1 bis 4 Isocyanatgruppen und 2 - 48 C-Atomen und gegebenenfalls von

(C) (1) einem oder mehreren primären oder sekundären gesättigten oder ungesättigten Mono- oder Diamin(en) und/oder

(2) einem oder mehreren gesättigten oder ungesättigten Mono- oder Dihydroxyverbindungen oder den entsprechenden Mercaptoverbindungen

darstellt und in der Aminform oder nach Ausbildung von kationischen Gruppen durch Umsetzung mit einer Säure als organische, wäßrig-organische oder wäßrige Lösungen bzw. Dispersionen vorliegt, und anschließend bei einer Temperatur ab 100°C härtet.

2. Verfahren nach Anspruch 1, dadurch gekennzeichnet, daß man die aufgetragene Beschichtungskomposition bei einer Temperatur von 120 bis 140°C härtet.

3. Verfahren nach den Ansprüchen 1 bis 2, dadurch gekennzeichnet, daß man auf dem zu lackierenden Gegenstand eine Beschichtungskomposition aufträgt, die das Reaktionsprodukt von mindestens

(A) einem Polyaminoamid, das aus

(1) einer oder mehreren überwiegend höheren Fettsäure(n) und einem oder mehreren Polyaminen und/oder

(2) Dicarbonsäuren, gegebenenfalls im Gemisch mit Tricarbonsäuren und/oder mit vorwiegend höheren, im wesentlichen ungesättigten Fettsäuren, und einem oder mehreren Polyaminen hergestellt worden ist,

wobei das Polyaminoamid gegebenenfalls teilweise unter Wasserabspaltung entstandene cyclische Amidingruppierungen und/oder als Ketimin blockierte Aminogruppen enthält,

(B) einem oder mehreren organischen Isocyanat(en) mit 1 bis 4 Isocyanatgruppen und gegebenenfalls von

(C) (1) einem oder mehreren primären oder sekundären gesättigten oder ungesättigten Mono- oder Diamin(en) und/oder

(2) einem oder mehreren gesättigten oder ungesättigten Mono- oder Dihydroxyverbindungen oder den entsprechenden Mercaptoverbindungen

darstellt und in der Aminform oder nach Ausbildung von kationischen Gruppen durch Umsetzung mit einer Säure als organische, wäßrig-organische oder wäßrige Lösungen bzw. Dispersionen vorliegt.

4. Verfahren nach Anspruch 3, dadurch gekennzeichnet, daß man auf dem zu lackierenden Gegenstand eine Beschichtungskomposition aufträgt, worin die Komponente A (1) ein Reaktionsprodukt aus Ricinenfettsäuren oder Ricinenfettsäuren und Essigsäure oder Stearinsäure mit einem oder mehreren Alkylen- bzw. Polyalkylenpolyaminen der Formel

$$H_2N - (CH_2 - CH_2 - NH)_n - CH_2 - CH_2 - NH_2,$$

worin n = 0 und/oder 1 und/oder 2 und/oder 3 bedeuten, und/oder

$$H_2N -(CH_2-CH_2-CH_2-NH)_n-R-NH-CH_2-CH_2-CH_2-NH_2,$$

worin n = O und/oder 1 und R eine Alkylengruppe mit 2 bis 6 C-Atomen oder Diäthylenamin - $CH_2$-$CH_2$-NH-$CH_2$-$CH_2$- bedeuten, ist und das Reaktionsprodukt gegebenenfalls zusätzlich teilweise unter Wasserabspaltung entstandene Imidazolin-und/oder Tetrahydropyrimidinringe und/oder Ketimingruppen enthält.

5. Verfahren nach den Ansprüchen 3 bis 4, daß die Komponente A (2) ein Reaktionsprodukt aus Dimerfettsäuren und gegebenenfalls Tallölfettsäuren oder Ricinenfettsäuren mit einem oder mehreren Polyalkylen-polyaminen der Formeln

$$H_2N-(CH_2-CH_2-NH)_n-CH_2-CH_2-NH_2 \quad \text{und/oder}$$

$$H_2N-(CH_2-CH_2-CH_2-NH)_m-R-NH-CH_2-CH_2-CH_2-NH_2,$$

worin n = o und/oder 1 und/oder 2 und/oder 3 und m = O und/oder 1 und R eine Alkylengruppe von 2 - 6 C-Atomen oder Diäthylenamin-$CH_2$-$CH_2$-NH-$CH_2$-$CH_2$ - bedeuten, ist und das Reaktionsprodukt gegebenenfalls teilweise unter Wasserabspaltung entstandene Imidazolinringe und/oder Tetrahydropyrimidinringe und/oder Ketimingruppen enthält.

6. Verfahren nach den Ansprüchen 3 bis 5, dadurch gekennzeichnet, daß die Komponente (B) ein Gemisch aus 2,4- und 2,6-Diisocyanato-toluol und/oder 4,4'-Diisocyanato-diphenylmethan oder ein Gemisch dieser Diisocyanate mit einem Monoisocyanat darstellt.

7. Verfahren nach den Ansprüchen 3 bis 6, dadurch gekennzeichnet, daß die Komponente (B) ein Triisocyanat oder ein Gemisch aus einem Triisocyanat und einem Mono- und/oder Diisocyanat darstellt.

8. Verfahren nach den Ansprüchen 3 bis 7, dadurch gekennzeichnet, daß die Komponente (C) (1) Allylamin, Diallylamin, Di-n-propylamin, Di-n-butylamin, Di-i-butylamin, Piperidin, Hexamethylendiamin, Diaminodiphenylsulfon, Diaminodiphenylmethan, 4,9-Dioxadodecan-1,12-diamin und/oder 4,7-Diocadecan-1,10-diamin ist.

9. Verfahren nach den Ansprüchen 3 bis 8, dadurch gekennzeichnet, daß die Komponente (C) (2) Allyl- oder Methallylalkohol, ein Norborneyl-, Cyclohexenyl-, Dihydropyranyl-, Cyclopentenyl-, Dicyclopentenyl-alkohol, tert.-Butylmercaptan und/oder Dodecylmercaptan ist.

10. Verfahren nach den Ansprüchen 3 bis 9, dadurch gekennzeichnet, daß im Harz der Gehalt der Polyaminoamidkomponente(n) (A) zwischen 20 - 90 Gew.-%, der Gehalt der Isocyanatkomponente(n) (B) zwischen 5 und 60 Gew.-% und bei Verwendung der Komponente(n) (C) deren Gehalt bis zu 60 Gew.-% beträgt.

11. Verfahren nach den Ansprüchen 3 bis 10, dadurch gekennzeichnet, daß der basische N-Gehalt des Harzes 0,05 - 5,0 Äquivalente/1000 g Harz und der Neutralisationsgrad des mit Säure umgesetzten basischen Harzes bis zu 5 Äquivalente/1000 g Harz beträgt.

12. Verfahren nach den Ansprüchen 3 bis 11, dadurch gekennzeichnet, daß die organische Harzlösung oder die wäßrige Harzdispersion Schwefel und/oder Sikkative auf der Basis von Acetylacetonaten, Naphthenaten, Oleaten und/oder Acetaten von Schwermetallverbindungen und/oder Haftvermittler und/oder Pigmente auf der Basis von Schwermetallverbindungen und/oder Füllstoffen enthält.

13. Verfahren nach den Ansprüchen 1 bis 12, dadurch gekennzeichnet, daß der Auftrag der Beschichtungskomposition durch Spritzlackieren und Tauchen erfolgt.

14. Verfahren nach den Ansprüchen 1 - 12, dadurch gekennzeichnet, daß der Auftrag der Beschichtungskomposition nach dem kathodischen Elektrotauchlackieren erfolgt.

Europäisches Patentamt

# EUROPÄISCHER RECHERCHENBERICHT

0134970 Nummer der Anmeldung

EP 84 10 7819

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 169 080 (A.T. SPENCER)<br>* Spalten 5,6; Ansprüche 1,2,5; Spalte 2, Zeile 57 - Spalte 3, Zeile 58; Spalte 4, Zeilen 7-9 *<br>--- | 1,2,4, 9-12, 14 | C 08 G 18/38<br>C 08 G 18/60<br>C 08 G 18/08<br>C 08 G 18/28<br>C 08 G 18/67<br>C 09 D 5/44 |
| X | DE-A-2 131 060 (P.P.G. IND)<br>* Seiten 23-25; Ansprüche 1-16; Seite 3, Absatz 1; Seite 5, Absätze 2-5; Seite 11, letzter Absatz - Seite 12, Absatz 3 *<br>--- | 1,2,4-6,9-12,14 | |
| X | FR-A-1 230 895 (SCHERING AG)<br>* Seite 4, Zusammenfassung Punkt 1; Seite 2, linke Spalte, Absätze 5,7; Seiten 2,3, Beispiel 1 *<br>--- | 1,2,4-6,9-13 | RECHERCHIERTE SACHGEBIETE (Int. Cl.4) |
| X | US-A-3 523 925 (M.R. KAMAL et al.)<br>* Spalten 10,11, Anspruch 1; Spalte 2, Zeilen 8-69; Spalte 3, Zeilen 14-69; Spalte 7, Zeile 74 - Spalte 8, Zeile 36; Spalte 9, Zeilen 22-40; Spalte 10, Zeilen 49-51 *<br>--- -/- | 1-6,11,12 | C 08 G<br>C 09 D |

Der vorliegende Recherchenbericht wurde für alle Patentansprüche erstellt.

| Recherchenort | Abschlußdatum der Recherche | Prüfer |
|---|---|---|
| DEN HAAG | 01-11-1984 | VAN PUYMBROECK M.A. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches Patentamt

**EUROPÄISCHER RECHERCHENBERICHT**

0134970
Nummer der Anmeldung

EP 84 10 7819

Seite 2

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| P,X | EP-A-0 086 893 (AKZO)(Veröffentlicht 31.08.1983) * Ansprüche 1-9; Seite 4, letzter Absatz - Seite 5, letzter Absatz; Seite 8, letzter Absatz - Seite 9, letzter Absatz * ----- | 1-12, 14 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 01-11-1984 | VAN PUYMBROECK M.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82